# EUROPÄISCHE PATENTSCHRIFT

(11) **EP 2 068 009 B1**
(45) Veröffentlichungstag und Bekanntmachung des Hinweises auf die Patenterteilung: **26.10.2011**
(21) Anmeldenummer: 08019764.3
(22) Anmeldetag: 12.11.2008
(51) Int. Cl.: F16B 13/06

(54) **Spreizanker**
Split anchor
Ancre extensible

(30) Priorität: 06.12.2007 DE 102007058775
(43) Veröffentlichungstag der Anmeldung: 10.06.2009
(73) Patentinhaber: fischerwerke GmbH & Co. KG, 72178 Waldachtal (DE)
(72) Erfinder: Mayer, Klaus, 72469 Meßstetten (DE); Schäuffele, Jürgen, 72290 Lossburg/Wittendorf (DE); Schillinger, Peter, 72224 Ebhausen (DE)

(56) Entgegenhaltungen:
- CH-A5- 661 569
- DE-A1- 19 815 334
- DE-A1-102004 010 727

## Beschreibung

Die Erfindung betrifft einen Spreizanker aus Metall mit den Merkmalen des Oberbegriffs des Anspruchs 1 (CH 661 569 A5).

Derartige Spreizanker sind allgemein zur Befestigung großer Lasten benannt. Sie weisen einen Spreizkörper auf, der in eine Spreizhülse einziehbar ist. Umgekehrt kann auch die Spreizhülse über den Spreizkörper geschoben werden. Die Spreizhülse, meist ein Blechstanzbiegeteil, weist ein oder mehrere Schlitze auf, die die Spreizhülse in mehrere Spreizschenkel aufteilt. Der Spreizkörper ist zumeist als Spreizkegel ausgeführt und ist entweder drehfest, gegebenenfalls einstückig in einen Ankerschaft verbunden oder er ist als Spreizkegetmutter ausgeführt, in den der Ankerschaft schraubenartig mit einem Gewinde eingreift. An seinem dem Einführende mit dem Spreizkörper abgewandten Ende weisen derartige. Spreizanker eine Befestigungsvorrichtung als Widerlager auf. Das Widerlager kann eine Mutter oder ein Schraubenkopf sein, der gegen den zu befestigenden Gegenstand angezogen wird. Die Spreizhülse stützt sich entweder über eine Hülse am Wiederlager ab (Hülsenanker) oder an einer Schulter am Ankerschaft (Bolzenanker).

Insbesondere für Porenbeton, der gegenüber Normalbeton eine geringe Festigkeit aufweist, besteht das Problem, dass konventionelle Spreizanker eine zu geringe Aufspreizung erreichen, so dass sie bereits bei geringen Lasten aus dem Bohrloch gezogen werden können.

Der Erfindung liegt daher die Aufgabe zu Grunde, einen Spreizanker aus Metall mit verbesserter Leistungsfähigkeit in Porenbeton als Befestigungsgrund zu schaffen.

Diese Aufgabe wird erfindungsgemäß durch die Merkmale des Anspruchs 1 gelöst. Der erfindungsgemäße Spreizanker weist eine Spreizhülse mit Schlitzen auf, die im Wesentlichen wendelförmig um die Längsachse des Spreizankers verlaufen. Im Gegensatz dazu weisen bekannte Spreizanker axial verlaufende Schlitze auf. Zwar können die Speizschenkel beispielsweise durch entsprechend weites Einziehen des Spreizkörpers weit aufgespreizt werden, doch wird der Umfangsbereich zwischen den Spreizschenkeln dann nicht aktiviert. Mit dem Begriff "aktivieren" ist gemeint, dass gegen diesen Umfangsbereich die Spreizhülse gepresst wird oder es in diesem Umfangsbereich zu einer verformenden Hinterschneidung kommt. Demgegenüber haben wendelförmig verlaufende Schlitze den Vorteil, dass ein größerer Umfang aktiviert werden kann, da die Spreizschenkel in Achsrichtung des Spreizankers gesehen (Draufsicht) im aufgespreizten Zustand spriralförmig verlaufen. Die Schlitze müssen dazu nicht wendelförmig im streng geometrischen Sinne verlaufen. Sie können beispielsweise auch stufenartig oder wellenartig verlaufen, wobei der Verlauf nur noch in Näherung gesehen wendelförmig ist.

Der Spreizanker weist eine weitere Spreizhülse auf, wodurch die Aktivierung noch deutlich besser erreicht werden kann. Dabei umfasst die eine der beiden Spreizhülsen als äußere Spreizhülse die andere Spreizhülse als innere Spreizhülse zumindest teilweise. Damit ist insbesondere gemeint, dass die Spreizhülsen in Längsrichtung des Ankers gesehen nicht hintereinander angeordnet sind, sondern sich zumindest teilweise überlappen. Auf diese Weise spreizen sich die Spreizschenkel beider Spreizhülsen auf und bilden wiederum in der Draufsicht gesehen ein Geflecht von Spreizschenkeln, die zum einen noch mehr Fläche hintergreifen, da jeweils die Lücken der anderen Spreizhülse ausgefüllt werden können. Zum anderen können sich die Spreizschenkel gegenseitig stützen und dadurch stabilisieren. Eine derartige Stabilisierung kann außerdem durch eine Aufrauung der Kontaktflächen oder durch eine Verzahnung an den Schlitzen zusätzlich gefördert werden.

Die weitere Spreizhülse weist ebenfalls wendelförmig verlaufende Schlitze auf, wobei die Steigungen der Wendel unterschiedlich sein können. Im Gegensatz zu axial verlaufenden Schlitzen können hierdurch die oben angesprochenen Lücken zwischen den Spreizschenkeln der ersten Spreizhülse besser ausgefüllt werden.

Eine besonders gute Aktivierung des den Anker umgebenden Befestigungsgrunds wird erreicht, well die Wendeln der beiden Spreizhülsen gegenläufig sind. Hierdurch entsteht beim Verspreizen ein Netz sich überlappender Spreizschenkel, das besonders stabil ist und somit hohe Haltekräfte des Spreizankers bewirkt.

Die Spreizhülsen können die gleiche Wandstärke aufweisen, was den Vorteil hat, dass sie aus dem gleichen Blech gefertigt werden können. Eine noch höhere Stabilität ergibt sich jedoch, wenn die äußere Spreizhülse eine geringere Wanddicke als die innere Spreizhülse aufweist.

Eine Vereinfachung der Produktion des Ankers ergibt sich, wenn die Spreizhülsen einstückig miteinander sind. Die vorgestanzte Spreizhülse kann beispielsweise einfach umgefaltet werden. Dies kann derart erfolgen, dass beiden Spreizhülse die gleiche axiale Länge aufweisen oder beispielsweise die innere Spreizhülse in Richtung des Spreizkörpers vorsteht.

Vorzugsweise weist der Spreizanker eine Verdrehsicherungseinrichtung auf. Diese kann einerseits als Sicherung gegen Verdrehen zwischen der Spreizhülse und dem Spreizkörper vorgesehen sein und andererseits zwischen der Spreizhülse und dem Untergrund. Infrage hierfür kommen unterschiedlichste Geometrien wie Nasen, Rippen, Laschen oder Kanten, die radial über den sonstigen Querschnitt ragen. Insbesondere bei weichem Porenbeton ist es wichtig, dass die Spreizhülse beim Beginn des Spreizvorgangs gegen ein Mitdrehen gegenüber dem Untergrund gesichert ist.

Vorzugsweise weist der Spreizanker an dem einbringseitigen Ende eine Einschlagspitze auf. Dies ermöglicht, dass der Anker ohne Vorbohren in einen weichen Untergrund eingeschlagen werden kann oder zumindest eine Bohrung geringen Durchmessers hierfür ausreicht.

Die Erfindung wird nachfolgend anhand eines Ausführungsbeispiels näher erläutert.

Es zeigen:
- Figur 1: den erfindungsgemäßen Spreizanker;
- Figur 2a und 2b: noch ungebogene Stanzplatinen der beiden Spreizhülsen des Spreizankers aus Figur 1; und
- Figur 3: die Stanzplatine zu alternativen Spreizhülsen für den Spreizanker aus Figur 1.

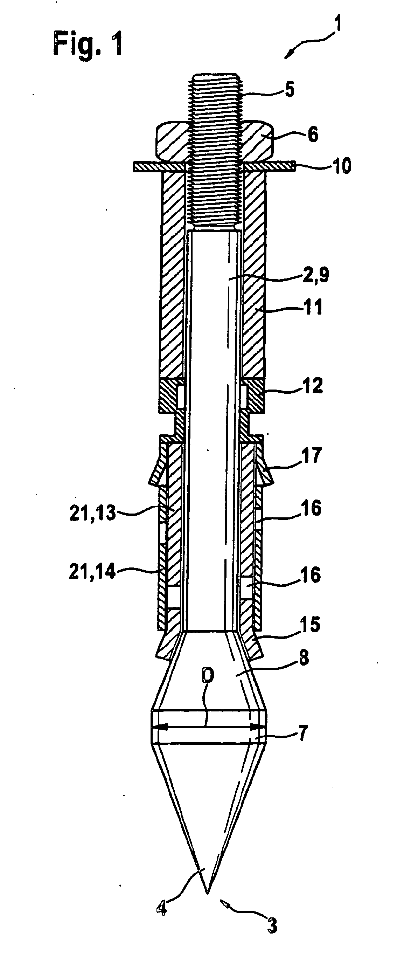

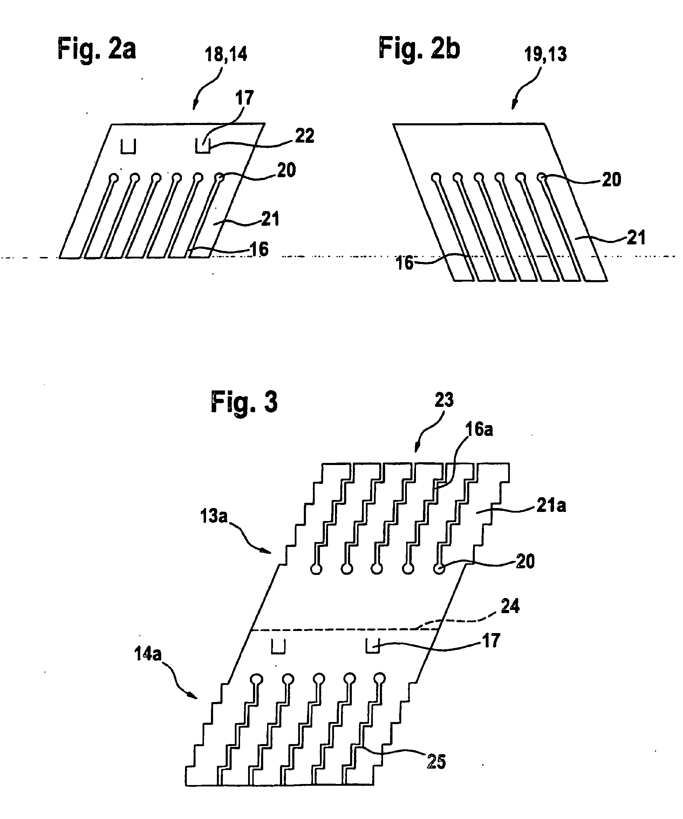

Der in Figur 1 dargestellte Spreizanker 1 weist einen Ankerschaft 2 auf, an dessen einbringseitigem Ende 3 eine Einschlagspitze 4 vorgesehen ist. An seinem entgegensetzten Ende weist der Ankerschaft 2 ein Außengewinde 5 auf, auf das eine Mutter 6 vormontiert ist. An die Einschlagspitze 4 schließt sich ein zylindrischer Abschnitt 7 an, der den größten Durchmesser D desjenigen Teils des Spreizankers 1 aufweist, der für die Aufnahme in einem Bohrloch bestimmt ist. Beim Einschlagen des Spreizankers 1 in einen nicht dargestellten Untergrund wird somit das Verankerungsloch durch die Einschlagspitze. 4 und den zylindrischen Abschnitt 7 in dem benötigten Durchmesser geformt. An den zylindrischen Abschnitt 7 schließt sich ein konischer Spreizkörper 8 und hieran wiederum ein stabförmiger Mittelabschnitt 9 an. Der Mittelabschnitt 9 verbindet den sich konisch in Richtung des zylindrischen Abschnitts 7 erweiternden Spreizkörper 8 mit dem Außengewinde 5 des Ankerschafts 2. Neben der Mutter 6 ist der Ankerschaft 2 von mehreren Bauteilen umgeben. So schließt sich an die Mutter 6 eine Unterlegscheibe 10 und hieran im Bereich des Mittelabschnitts 9 des Ankerschafts 2 eine Distanzhülse 11 an. Diese stößt an ein Ausgleichselement 12 aus Kunststoff an, weiches sich wiederum an einer inneren und einer äußeren Spreizhülse 13, 14 abstützt. Die äußere Spreizhülse 14 umfasst die innere Spreizhülse 13 über den ganzen Umfang. Die äußere Spreizhülse 14 ist aus einem dünneren Blech gefertigt als die innere Spreizhülse 13 und außerdem axial kürzer als diese, so dass die innere Spreizhülse 13 in Richtung des konischen Spreizkörpers 8 axial vorsteht. Das vordere Ende 15 der inneren Spreizhülse 13, welches vorsteht, ist leicht radial nach außen gebogen, so dass die innere Spreizhülse 13 geometrisch an den konischen Spreizkörper 8 angepasst ist und an diesem anliegt. Beide Spreizhülsen 13, 14 weisen wendelförmig verlaufende Schlitze 16 auf, wie dies anhand der Figuren 2a und 2b noch im Weiteren erläutert wird. Darüber hinaus weist die äußere Spreizhülse 14 Nasen 17 auf, die radial nach außen gestellt sind und als Verdrehsicherungseinrichtung wirken.

In Figur 2a ist die Stanzplatine 18 der äußeren Spreizhülse 14 und in Figur 2b die Stanzplatine 19 der inneren Spreizhülse 13 dargestellt. Die Stanzplatinen 18, 19 sind jeweils in ungebogenem Zustand dargestellt. Sie weisen beide jeweils die Grundform eines Parallelogramms auf, in das von einer Außenkante her parallel zu einer weiteren Außenkante die Schlitze 16 eingebracht sind. Die Schlitze 16 münden jeweils in kreisförmige Ausnehmungen 20, die verhindern sollen, dass die Spreizhülse 18, 19 beim Umformen während des Produktionsprozesses oder beim Verspreizen der Spreizhülsen 13, 14 an dieser Stelle ausreißt. Durch die Schlitze 16 sind die Spreizhülsen 13, 14 in Spreizschenkel 21 unterteilt. Die Spreizschenkel 21 erstrecken sich über etwa 2/3 der Länge der Spreizhülsen 13, 14. Die äußere Spreizhülse 14 weist außerdem außerhalb des Bereichs der Spreizschenkel 21 zwei U-förmige Ausnehmungen 22 zur Bildung der Nasen 17 auf. Im Verlauf des Umformprozesses werden die Nasen 17 nach außen gestellt. Ansonsten werden die Stanzplatinen 18, 19 derart gerollt, dass sie jeweils einen zylindrischen Körper ergeben.

Zur Verankerung wird der in Figur 1 dargestellte Spreizanker 1 durch ein Loch in einem zu befestigenden Gegenstand hindurch in den Untergrund, beispielsweise aus Porenbeton, eingetrieben, wobei der Spreizanker 1 den in Figur 1 dargestellten unverspreizten Zustand aufweist. Der Spreizanker 1 wird so weit eingetrieben, bis die Unterlegscheibe 10 auf der Außenseite des zu befestigenden Gegenstands aufsitzt. Im Weiteren wird die Mutter 6 angezogen. Hierdurch wird der Ankerschaft 2 axial gezogen. Durch die Abstützung über das Ausgleichselement, die Distanzhülse 11 und die Unterlegscheibe 10 bleiben dagegen die innere und die äußere Spreizhülse 13, 14 unverschoben. Anders ausgedrückt wird der Spreizkörper 8 in die beiden Spreizhülse 13, 14 eingezogen. Die beiden Nasen 17 verhindern dabei, dass die äußere Spreizhülse 14 gegenüber dem Untergrund verdreht wird. Zwischen der äußeren Spreizhülse 14 und der inneren Spreizhülse 13 sowie zwischen der inneren Spreizhülse 13 und dem Ankerschaft 2 wirkt so viel Reibung, dass in diesem Fall keine weitere Verdrehsicherungseinrichtung notwendig ist. Durch das Einziehen des Spreizkörpers 8 in die Spreizhülse 13, 14 werden die Spreizschenkel 21 radial nach außen verspreizt. Da die Schlitze 16 gegenläufig wendelförmig verlaufen, bildet sich dabei eine Art sich stützendes Geflecht von Spreizschenkeln 21. Hierdurch wird der Untergrund in diesem Bereich über den gesamten Umfang aktiviert. Durch die Verformbarkeit des an sich bekannten Ausgleichselements 12 kann der zu befestigende Gegenstand abschließend noch an den Untergrund herangezogen werden. Das Ausgleichselement 12 kann hierzu axial gestaucht werden.

Figur 3 zeigt eine alternative Stanzplatine 23 für eine innere Spreizhülse 13a und eine äußere Spreizhülse 14a, wobei die beiden Spreizhülsen 13a, 14a einstückig miteinander sind. Um dies zu ermöglichen, weist die Stanzplatine 23 eine Faltlinie 24 auf, an der die Stanzplatine 23 vor dem Rollen zu einer Hülse um 180° gebogen wird. Weiterhin unterscheidet sich die Stanzplatine 23 dadurch, dass die Schlitze 16a nicht gerade, sondern stufenförmig verlaufen. Sie bilden somit zackige Spreizschenkel 21a, wobei die Zacken 25 der äußeren Spreizhülse 16a außerdem noch leicht nach außen gestellt sein können. Durch die Zacken 25 kommt es einerseits zu einer zusätzlichen Verdrehsicherungseinrichtung und andererseits beim Aufspreizen der Spreizhülse 13a, 14a zu einem die Stabilität begünstigenden Verhaken der Spreizschenkel 21a.

### Bezugszeichenliste

### Spreizanker

- 1: Spreizanker
- 2: Ankerschaft
- 3: einbringseitiges Ende
- 4: Einschlagsperre
- 5: Außengewinde
- 6: Mutter
- 7: zylindrischer Abschnitt
- 8: konischer Spreizkörper
- 9: Mittelabschnitt '
- 10: Unterlegscheibe
- 11: Distanzhülse
- 12: Ausgleichselement
- 13, 13a: innere Spreizhülse
- 14, 14a: äußere Spreizhülse
- 15: vorderes Ende (der inneren Spreizhülse 13)
- 16, 16a: Schlitze
- 17: Nasen
- 188: Stanzplatine der äußeren Spreizhülse 14
- 19: Stanzplatine der inneren Spreizhülse 13
- 20: kreisförmige Ausnehmung
- 21, 21a: Spreizschenkel
- 22: U-förmige Ausnehmung
- 23: Stanzplatine
- 24: Faltlinie
- 25: Zacken

## Patentansprüche

1. Spreizanker (1) aus Metall, mit einem Spreizkörper (8) und mit einer Spreizhülse (13, 13a), die durch Einziehen des Spreizkörpers (8) in die Spreizhülse (13, 13a) oder Aufschieben der Sprelzhülse (13, 13a) auf den Spreizkörper (8) aufspreizbar ist, wobei die Spreizhülse (13, 13a) Schlitze (16, 16a) aufweist, die ausgehend vom dem Spreizkörper (8) zugewandten Ende (15) die Spreizhülse (13, 13a) in mehrere Spreizschenkel (21, 21a) teilt, wobei die Schlitze (16, 16a) im Wesentlichen wendelförmig um die Längsachse des Spreizankers (1) verlaufen, **dadurch gekennzeichnet,**
- **dass** der Spreizanker (1) eine weitere Spreizhülse (14, 14a) aufweist und dass eine der beiden Spreizhülsen (14, 14a) als äußerte Spreizhülse die andere Spreizhülse (13, 13a) als innere Spreizhülse zumindest teilweise umfasst,
- **dass** die weitere Spreizhülse (14, 14a) Schlitze (16, 16a) aufweist, die ausgehend vom dem Spreizkörper (8) zugewandten Ende die Spreizhülse (14, 14a) wendelförmig verlaufend in mehrere Spreizschenkel (21 ,21a) tellt, und
- **dass** die Schlitze (16, 16a) der beiden Spreizhülsen (13, 13a, 14, 14a) gegenläufig wendelförmig verlaufen.

2. Spreizanker nach Anspruch 1, **dadurch gekennzeichnet, dass** die Spreizhülsen (13a, 14a) die gleiche Wandstärke aufweisen.

3. Spreizanker nach Anspruch 1, **dadurch gekennzeichnet, dass** die äußere Spreizhülse (14) eine geringere Wanddicke als die innere Spreizhülse (13) aufweist.

4. Spreizanker nach Anspruch 1, **dadurch gekennzeichnet, dass** die Spreizhülsen (13a, 14a) einstückig miteinander sind.

5. Spreizanker nach einem der vorstehenden Ansprüche, **dadurch gekennzeichnet, dass** der Spreizanker (1) eine Verdrehsicherungseinrichtung (17) aufweist.

6. Spreizanker nach Anspruch 5, **dadurch gekennzeichnet, dass** die Verdrehsicherungselnrichtung (17) an der Spreizhülse (14, 14a) und/oder am Spreizkörper (8) angeordnet ist.

7. Spreizanker nach einem der vorstehenden Ansprüche, **dadurch gekennzeichnet, dass** das einbringseitige Ende (3) des Spreizankers (1) eine Einschlagspitze (4) aufweist.

## Claims

1. Expansible anchor (1) made of metal, having an expander body (8), and having an expansion sleeve (13, 13a) which is arranged to be expanded as a result of the expander body (8) being drawn into the expansion sieve (13, 13a) or as a result of the expansion sleeve (13, 13a) being pushed up onto the expander body (8), the expansion sleeve (13, 13a) having slits (16, 16a) which, starting from the end (15) facing the expander body (8), divide the expansion sleeve (13, 13a) into a plurality of expansion legs (21, 21a), the slots (16, 16a) being arranged substantially helically around the longitudinal axis of the expansible anchor (1), **characterised**
- **in that** the expansible anchor (1) has a further expansion sleeve (14, 14a) and in that one of the two expansion sleeves (14, 14a), as outer expansion sleeve, at least partly surrounds the other expansion sleeve (13, 13a), as inner expansion sleeve,
- **in that** the further expansion sleeve (14, 14a) has slits (16, 16a) which, starting from the end facing the expander body (8) divide the expansion sleeve (14, 14a) into a plurality of expansion legs (21, 21 a) helically arranged, and
- **in that** the slits (16, 16a) of the two expansion sleeves (13, 13a, 14, 14a) are oppositely helically arranged.

2. Expansible anchor according to claim 1, **characterised in that** the expansion sleeves (13a, 14a) have the same wall thickness.

3. Expansible anchor according to claim 1, **characterised in that** the outer expansion sleeve (14) has a thinner wall thickness than the inner expansion sleeve (13).

4. Expansible anchor according to claim 1, **characterised in that** the expansion sleeves (13a, 14a) are together in the form of a single part.

5. Expansible anchor according to one of the preceding claims, **characterised in that** the expansible anchor (1) has a rotation-preventing means (17).

6. Expansible anchor according to claim 5, **characterised in that** the rotation-preventing means (17) is arranged on the expansion sleeve (14, 14a) and/or on the expander body (8).

7. Expansible anchor according to one of the preceding claims, **characterised in that** the introduction end (3) of the expansible anchor (1) has a driving-in tip (4).

## Revendications

1. Élément d'ancrage à expansion (1) en métal, avec un corps d'expansion (8) et avec une coquille d'expansion (13, 13a) qui peut être expansée en rentrant le corps d'expansion (8) dans la coquille d'expansion (13, 13a) ou en enfilant la coquille d'expansion (13, 13a) sur le corps d'expansion (8), sachant que la coquille d'expansion (13, 13a) présente des fentes (16, 16a) qui, en partant de l'extrémité (15) tournée vers le corps d'expansion (8), divisent la coquille d'expansion (13, 13a) en plusieurs branches d'expansion (21, 21a), sachant que les fentes (16, 16a) s'étendent essentiellement en hélice autour de l'axe longitudinal de l'élément d'ancrage à expansion (1), **caractérisé**
- **en ce que** l'élément d'ancrage à expansion (1) présente une coquille d'expansion supplémentaire (14, 14a) et en ce qu'une des deux coquilles d'expansion (14, 14a), en qualité de coquille d'expansion extérieure, entoure au moins partiellement l'autre coquille d'expansion (13, 13a), en qualité de coquille d'expansion intérieure,
- **en ce que** la coquille d'expansion supplémentaire (14, 14a) présente des fentes (16, 16a) qui, en s'étendant en hélice en partant de l'extrémité tournée vers le corps d'expansion (8), divisent la coquille d'expansion (14, 14a), en plusieurs branches d'expansion (21, 21a),
- et **en ce que** les fentes (16, 16a) des deux coquilles d'expansion (13, 13a, 14, 14a) s'étendent en hélices en sens contraires.

2. Élément d'ancrage à expansion selon la revendication 1, **caractérisé en ce que** les coquilles d'expansion (13a, 14a) présentent la même épaisseur de paroi.

3. Élément d'ancrage à expansion selon la revendication 1, **caractérisé en ce que** la coquille d'expansion extérieure (14) présente une plus faible épaisseur de paroi que la coquille d'expansion intérieure (13).

4. Élément d'ancrage à expansion selon la revendication 1, **caractérisé en ce que** les coquilles d'expansion (13a, 14a) sont solidaires l'une de l'autre.

5. Élément d'ancrage à expansion selon l'une des revendications précédentes, **caractérisé en ce que** l'élément d'ancrage à expansion (1) présente un dispositif de blocage en rotation (17).

6. Élément d'ancrage à expansion selon la revendication 5, **caractérisé en ce que** le dispositif de blocage en rotation (17) est disposé sur la coquille d'expansion (14, 14a) et/ou sur le corps d'expansion (8).

7. Élément d'ancrage à expansion selon l'une des revendications précédentes, **caractérisé en ce que** l'extrémité (3) de l'élément d'ancrage à expansion (1) qui est située du côté d'installation présente une pointe d'enfoncement (4).
